# EUROPEAN PATENT SPECIFICATION

(11) **EP 3 933 582 B1**
(45) Date of publication and mention of the grant of the patent: **19.07.2023**
(21) Application number: 21159869.3
(22) Date of filing: 01.03.2021
(51) Int. Cl.: G06F 9/48, G06F 9/54

(54) **DISTRIBUTED STORAGE METHOD AND DEVICE, ELECTRONIC APPARATUS AND COMPUTER-READABLE MEDIUM**
VERTEILTES SPEICHERVERFAHREN UND -VORRICHTUNG, ELEKTRONISCHES GERÄT UND COMPUTERLESBARES MEDIUM
PROCÉDÉ ET DISPOSITIF DE STOCKAGE DISTRIBUÉ, APPAREIL ÉLECTRONIQUE ET SUPPORT LISIBLE PAR ORDINATEUR

(30) Priority: 30.06.2020 CN 202010616643
(43) Date of publication of application: 05.01.2022
(73) Proprietor: BEIJING BAIDU NETCOM SCIENCE TECHNOLOGY CO., LTD., Beijing 100085 (CN)
(72) Inventor: QI, He, Beijing (CN); WANG, Yazhi, Beijing (CN)
(74) Representative: Canzler & Bergmeier Patentanwälte Partnerschaft mbB

(56) References cited:
- Liu Shaoshan ET AL: "A Unified Cloud Platform for Autonomous Driving", Computer, 18 December 2017 (2017-12-18), pages 42-49, XP55823044, DOI: 10.1109/MC.2017.4451224 Retrieved from the Internet: URL:https://ieeexplore.ieee.org/abstract/d ocument/8220475 [retrieved on 2021-07-10]
- Spark Community: "Job Scheduling - Spark 3.0.0 Documentation", , 28 June 2020 (2020-06-28), pages 1-6, XP55823045, Retrieved from the Internet: URL:https://web.archive.org/web/2020062803 0519/https://spark.apache.org/docs/latest/ job-scheduling.html [retrieved on 2021-07-10]
- Spark Community: "Spark Configuration", , 28 June 2020 (2020-06-28), pages 1-37, XP55823046, Retrieved from the Internet: URL:https://web.archive.org/web/2020062815 5344/http://spark.apache.org/docs/latest/c onfiguration.html#dynamic-allocation [retrieved on 2021-07-10]

## Description

### TECHNICAL FIELD

Embodiments of the present disclosure relate to technical fields of computer and cloud computing, and particularly to a distributed storage method, an electronic apparatus and a computer-readable medium.

### BACKGROUND

When storing data in a distributed manner, a distributed computing engine Spark needs to use an external shuffling service to perform jobs. Specifically, Spark continuously transmits data to the external shuffle service, and the external shuffle service merges and sorts the data before sending it to a distributed storage system (also known as a distributed file storage system or a distributed file system) for storage. After the data is successfully written into the distributed storage system, the external shuffle service will send a response message of successful data writing to an executor thread of Spark. This process operates inefficiently, takes a long time, and wastes resources.

Document of Liu Shaoshan ET AL: "A Unified Cloud Platform for Autonomous Driving", Computer, 18 December 2017 (2017-12-18), pages 42-49, XP055823044, document of Spark Community: "Job Scheduling-Spark 3.0.0 Documentation", 28 June 2020 (2020-06-28), pages 1-6, XP055823045, and document of Spark Community: "Spark Configuration", 28 June 2020 (2020-06-28), pages 1-37, XP055823046, disclose a mechanism to dynamically adjust resources that an application occupies based on the workload, in which the application may give the resources back to the cluster if they are no longer used.

### SUMMARY

The invention is set out in the appended set of claims.

### BRIEF DESCRIPTION OF THE DRAWINGS

The accompanying drawings are used to provide a further understanding of embodiments of the present disclosure, and constitute a part of the specification. The drawings, together with the embodiments of the present disclosure, are used to explain the present disclosure, rather than limiting the present disclosure. With the detailed description of exemplary embodiments with reference to the accompanying drawings, the above and other features and advantages will become more apparent to those skilled in the art. The drawings are as follows.
Fig. 1 is a schematic diagram of a process of using an external shuffle service to store data in a distributed manner according to an embodiment of the disclosure.
Fig. 2 is a flowchart of a distributed storage method according to an embodiment of the present disclosure.
Fig. 3 is a working flowchart of a driver thread in a distributed storage method according to an embodiment of the present disclosure.
Fig. 4 is another flowchart of a distributed storage method according to an embodiment of the present disclosure.
Fig. 5 is a flowchart of managing a pipeline task set by a pipeline thread according to an embodiment of the present disclosure.
Fig. 6 is another flowchart of managing a pipeline task set by a pipeline thread according to an embodiment of the present disclosure.
Fig. 7 is a flowchart of updating a state of a task by a state update function according to an embodiment of the present disclosure.
Fig. 8 is a flowchart of performing a failure callback by using a failure callback function according to an embodiment of the present disclosure.
Fig. 9 is a flowchart of performing a completion callback by using a completion callback function according to an embodiment of the present disclosure.
Fig. 10 is a flowchart of a distributed storage method according to an embodiment of the present disclosure.
Fig. 11 is a functional block diagram of a distributed storage device according to an example useful for understanding the invention.
Fig. 12 is a functional block diagram of a distributed storage device according to an example useful for understanding the invention.
Fig. 13 is a block diagram of an electronic apparatus according to an embodiment of the present disclosure.

### DETAILED DESCRIPTION

In order to enable those skilled in the art to better understand the technical solutions of the present disclosure, a distributed storage method, an electronic apparatus and a computer-readable medium according to the embodiments of the present disclosure will be described in detail below in conjunction with the accompanying drawings.

Although exemplary embodiments will be described in more detail below with reference to the accompanying drawings, the exemplary embodiments can be embodied in various forms, and should not be interpreted as limitation to the present disclosure. Rather, these embodiments are provided for facilitating thorough and complete understanding of the present disclosure, and enabling those skilled in the art to fully understand the scope of the present disclosure.

As used herein, the term "and/or" includes any and all combinations of one or more of the related listed items.

The terms used herein are used to describe specific embodiments, rather than limiting the present disclosure. As used herein, the singular forms "a/an" and "the" are also intended to include the plural forms, unless the context clearly indicated otherwise. It should also be understood that when the terms "include" and/or "made of" are used in the present specification, it specifies the presence of the described features, integers, steps, operations, elements and/or components, but does not exclude the presence or addition of one or more other features, integers, steps, operations, elements, components, and/or combinations thereof.

Unless otherwise defined, the meanings of all terms (including technical and scientific terms) used herein are the same as those commonly understood by those of ordinary skill in the art. It should also be understood that terms such as those defined in commonly used dictionaries should be interpreted as having meanings consistent with their meanings in the related technology and in the background of the present disclosure, and will not be interpreted as having idealized or over formal meanings, unless specifically defined as such herein.

When Spark transmits data to an external shuffle service, the external shuffle service receives, merges and simply sorts the data to generate a data group, and sends the data group to a distributed storage system for storage when a certain distributed storage condition is satisfied.

Usually, the distributed storage condition mainly includes a time condition, a quantity condition and a flush command. The time condition is a preset time threshold. When a waiting time of the external shuffle service reaches the preset time threshold, the external shuffle service sends the data group to the distributed storage system for storage. The quantity condition is a preset quantity threshold. When the amount of data received by the external shuffle service reaches the preset quantity threshold, the external shuffle service sends the data group to the distributed storage system for storage. The flush command is a mandatory flush command. The external shuffle service is forced to execute the flush command to send the data group to the distributed storage system for storage.

In this example, that Spark implements a specific function is called an application, and a specific execution unit that processes a data fragment is called a task. Tasks may be divided into two categories, namely, Map Shuffle Tasks and result tasks. The Map Shuffle Task writes data into the external shuffle service, and the external shuffle service stores the data to the distributed storage system for persist. The result task reads and merges the data from the distributed file system, and may also sort the data and generate a data group if necessary.

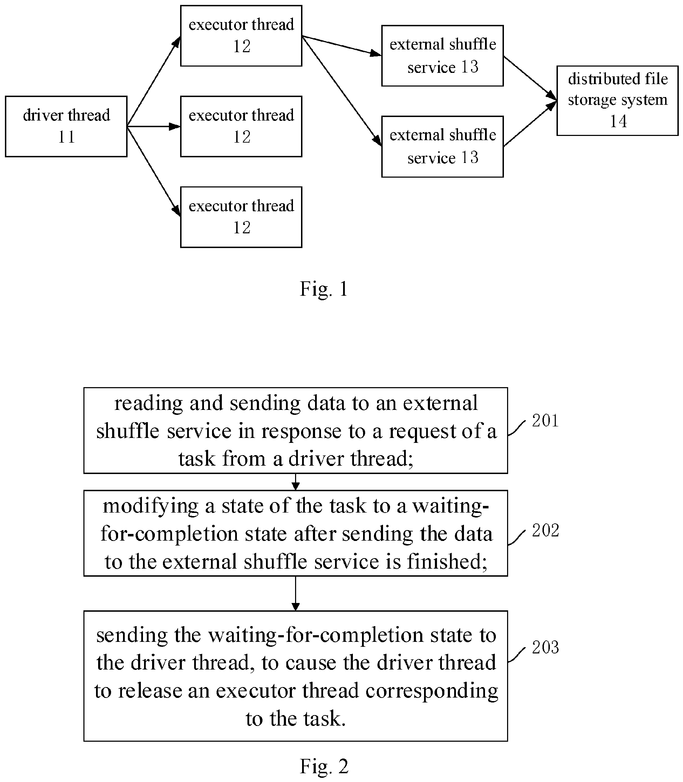

Fig. 1 is a schematic diagram of a process of using an external shuffle service to store data in a distributed manner according to an embodiment of the disclosure. As shown in Fig. 1, one application of Spark may have one driver thread 11 and a plurality of executor threads 12. The driver thread 11 is mainly responsible for task scheduling, and the executor thread 12 is responsible for performing specific tasks. Under the scheduling of the driver thread 11, the executor thread 12 sends data to the distributed file storage system 14 through the external shuffle service 13. When the data is sent to the distributed file storage system, the distributed file storage system may generate a plurality of copies of the data. After the data is successfully written into the distributed storage system, the external shuffle service will return a response message to the executor thread of Spark. Obviously, during a time period from when Spark sends the data to the external shuffle service to when the response message of successful writing is received, the executor thread of Spark is in a waiting state continuously, which wastes computing resources of the executor thread and also blocks the execution of subsequent tasks.

The examples of the present disclosure implement a distributed storage method for Spark using the external shuffle service, so as to optimize the pipeline performance of the external shuffle service. In a case of same resources, the parallelism of task operations is increased, thereby improving the operating efficiency of Spark and reducing resource waste.

In a first aspect of the present disclosure, provided is a distributed storage method. Fig. 2 is a flowchart of a distributed storage method according to an embodiment of the present disclosure. As shown in Fig. 2, the distributed storage method includes the following steps 201-203.

In step 201, data is read and sent to an external shuffle service, in response to a request of a task from a driver thread.

The driver thread assigns the task to an executor thread; and the executor thread executes the corresponding task in response to the request of the task from the driver thread, and stores the data in a distributed file system.

In this embodiment, the driver thread stores the data in the distributed file system through the external shuffle service. When the executor thread receives the task distributed by the driver thread, the executor thread reads the data and continuously sends the data to the external shuffle service, and the external shuffle service stores the data in the distributed file system.

In some examples, the executor thread performs a first task, namely a Map Shuffle Task and a second task, namely a result Task. The step of executing the Map Shuffle Task by the executor thread includes: reading user's data through the Map Shuffle Task in response to the request of the task from the driver thread, and constructing the data into a Resilient Distributed DataSet (RDD); calling a user's processing logic to process the RDD to obtain shuffle data; and finally, writing the shuffle data into the external shuffle service continuously.

In step 202, a state of the task is modified to a waiting-for-completion state after sending the data to the external shuffle service is finished.

In some examples, the executor thread uses a task set list to manage tasks, and the task set list marks a current state of each task. Task states include a started state, a running state, a completed state, a failed state, a stopped state, a lost state, and the waiting-for-completion state. The waiting-for-completion state is a state in which the sending the data to the external shuffle service has been finished by the executor thread, but the task has not been finished. In other words, when the data has been written into the external shuffle service, the data has not yet been written into the distributed file system through the external shuffle service, and thus the state of the task does not belong to the completed state, that is, the task has not been completely finished actually.

In th example, except for the original task states, the waiting-for-completion state is added to indicate that the data has been written into the external shuffle service and is waiting to be stored in the distributed file system by the external shuffle service. At this point, the executor thread has no specific work and no longer takes up resources.

In step 203, the waiting-for-completion state is sent to the driver thread, so that the driver thread releases the executor thread corresponding to the task.

In some examples, when the data is written into the external shuffle service by the executor thread, the waiting-for-completion state is sent to the driver thread. When the state of the task received by the driver thread is the waiting-for-completion state, the driver thread releases the executor thread corresponding to the task, so that the driver thread may reallocate tasks for the executor thread.

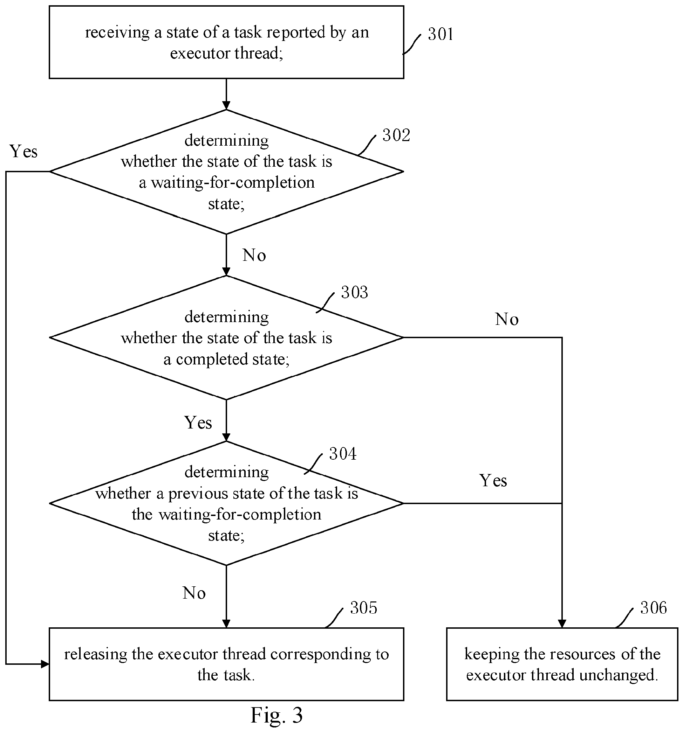

Fig. 3 is a working flowchart of a driver thread in a distributed storage method according to an embodiment of the present disclosure. As shown in Fig. 3, when receiving a state of a task reported by an executor thread, a driver thread performs the following steps 301-306.

In step 301, a state of a task reported by an executor thread is received.

In some examples, when the executor thread writes data into an external shuffle service, the executor thread reports to the driver thread that the state of the task is a waiting-for-completion state. When the executor thread receives a return message that the data storage has been completed returned by the external shuffle service or a distributed file system, the executor thread reports to the driver thread that the state of the task is a completed state.

In step 302, it is determined whether the state of the task is the waiting-for-completion state; and if so, step 305 is executed; otherwise, step 303 is executed.

In some examples, the driver thread determines the state of the task. When the state of the task is the waiting-for-completion state, step 305 is executed; and when the state of the task is not the waiting-for-completion state, step 303 is executed.

In step 303, it is determined whether the state of the task is a completed state; and if so, step 304 is executed; otherwise, step 306 is executed.

In some examples, the driver thread determines whether the state of the task is the completed state. When it is determined that the state of the task is the completed state, step 304 is executed. When it is determined that the state of the task is not the completed state, resources of the executor thread are kept unchanged; that is, the executor thread is not released.

In step 304, it is determined whether a previous state of the task is the waiting-for-completion state; and if so, step 306 is executed; otherwise, step 305 is executed.

In some examples, when the driver thread determines that the task is the completed state, it needs to determine again whether the previous state of the task is the waiting-for-completion state. When the previous state of the task is the waiting-for-completion state, step 306 is executed. When the previous state of the task is not the waiting-for-completion state, step 305 is executed.

In this example, it is determined twice whether the state of the task is the waiting-for-completion state in steps 302 and 304, to ensure that the driver thread releases the executor thread only once for the task in the waiting-for-completion state, thereby avoiding that the driver thread erroneously releases the resources of the executor thread due to logic confusion.

In step 305, the executor thread corresponding to the task is released.

In some examples, the driver thread releases the resources of the executor thread corresponding to the task in the waiting-for-completion state, so that the executor thread can execute a new task.

In this example, when the state of the task is the waiting-for-completion state, or when the state of the task is the completed state and the previous state is not the waiting-for-completion state, the driver thread releases the resources of the executor thread corresponding to the task.

In step 306, the resources of the executor thread are kept unchanged.

In some embodiments, when the state of the task is not the completed state, the executor thread is not released, and the resources of the executor thread are kept unchanged. When the state of the task is the completed state, and the previous state of the task is the waiting-for-completion state, the executor thread is not released, and the resources of the executor thread are kept unchanged.

According to the distributed storage method provided by the embodiments of the present disclosure, data is read and sent to an external shuffle service, in response to a request of a task from a driver thread; a state of the task is modified to a waiting-for-completion state after sending the data to the external shuffle service is finished; and the waiting-for-completion state is sent to the driver thread, so that the driver thread releases the executor thread corresponding to the task. That is, when the executor thread finishes sending the data to the external shuffle service, the executor thread returns to the driver thread that the task is in the waiting-for-completion state, and the driver thread immediately releases the executor thread corresponding to the task. It is not necessary to wait until the task is in a terminated state before releasing the corresponding executor thread, which reduces the waste of the resources of the executor thread and improves the efficiency of task operations.

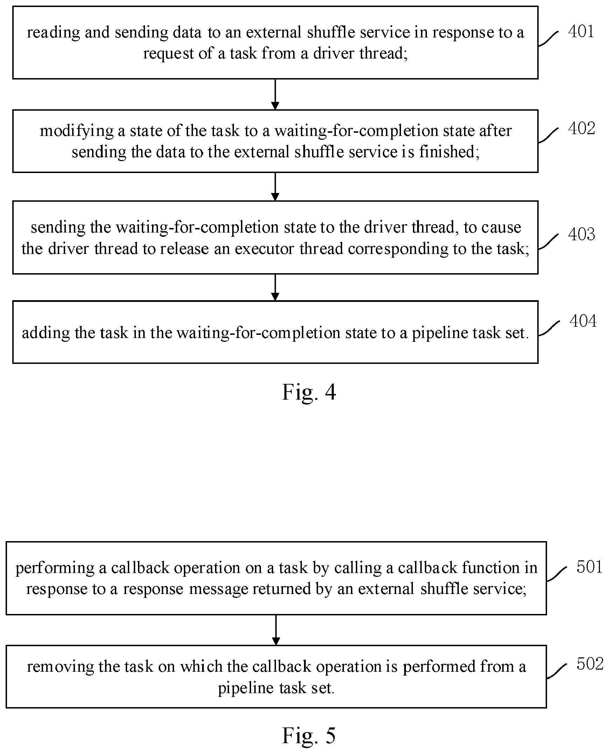

Fig. 4 is another flowchart of a distributed storage method according to an embodiment of the present disclosure. As shown in Fig. 4, the distributed storage method includes the following steps 401-404.

In step 401, data is read and sent to an external shuffle service, in response to a request of a task from a driver thread.

The driver thread assigns the task to an executor thread; and the executor thread executes the corresponding task in response to the request of the task from the driver thread, and stores the data in a distributed file system.

In this example, the driver thread stores the data in the distributed file system through the external shuffle service. When the executor thread receives the task distributed by the driver thread, the executor thread reads the data and continuously sends the data to the external shuffle service, and the external shuffle service stores the data in the distributed file system.

In some examples, the executor thread performs a first task, namely a Map Shuffle Task and a second task, namely a result Task. The step of executing the Map Shuffle Task by the executor thread includes: reading user's data through the Map Shuffle Task in response to the request of the task from the driver thread, and constructing the data into an RDD; calling a user's processing logic to process the RDD to obtain shuffle data; and finally, writing the shuffle data into the external shuffle service continuously.

The RDD is distributed read-only, and has partitioned set objects. These sets are resilient, and if a portion of the data sets is lost, it can be reconstructed.

In step 402, a state of the task is modified to a waiting-for-completion state after sending the data to the external shuffle service is finished.

In some examples, the executor thread uses a task set list to manage tasks, and the task set list marks a current state of each task. Task states include a started state, a running state, a completed state, a failed state, a stopped state, a lost state, and the waiting-for-completion state. The waiting-for-completion state is a state in which the sending the data to the external shuffle service has been finished by the executor thread, but the task has not been finished. In other words, when the data has been written into the external shuffle service, the data has not yet been written into the distributed file system through the external shuffle service, and thus the state of the task does not belong to the completed state, that is, the task has not been completely finished actually.

In this example, except for the original task states, the waiting-for-completion state is added to indicate that the data has been written into the external shuffle service and is waiting to be stored in the distributed file system by the external shuffle service. At this point, the executor thread has no specific work and no longer takes up resources.

In step 403, the waiting-for-completion state is sent to the driver thread, so that the driver thread releases the executor thread corresponding to the task.

In some examples, when the data is written into the external shuffle service by the executor thread, the waiting-for-completion state is sent to the driver thread. When the state of the task received by the driver thread is the waiting-for-completion state, the driver thread releases the executor thread corresponding to the task.

In step 404, the task in the waiting-for-completion state is added to a pipeline task set.

The pipeline task set is a set of tasks of which executor thread management states are waiting-for-completion states. In the pipeline task set, the tasks are managed in a list; that is, tasks and states thereof are listed in the list.

In some examples, the executor thread is provided with an external shuffle service plugin, a pipeline thread is added to the external shuffle service plugin, and the pipeline thread is responsible for maintaining the pipeline task set. When the executor thread writes the data into the external shuffle service, the executor thread adds the task to the pipeline task set, and modifies the state of the task to the waiting-for-completion state.

In this example, the pipeline thread manages the pipeline task set. Fig. 5 is a flowchart of managing a pipeline task set by a pipeline thread according to an embodiment of the present disclosure. As shown in Figure 5, that the pipeline thread manages the pipeline task set includes the following steps 501-502.

In step 501, a callback operation is performed on the task by calling a callback function, in response to a response message returned by the external shuffle service.

The response message returned by the external shuffling service is a message returned by the external shuffling service after executing the task, that is, a message returned after the external shuffling service stores the data in the distributed file system. The returned message is usually the state of the task.

In some examples, a result of the external shuffling service executing the task includes stop, timeout, and/or completion, etc., and a corresponding task state is a stopped state, a timeout state, and/or a completed state. For the convenience of description, this example collectively refers to these states as a terminated state which means that the task has been terminated. In other words, regardless of whether the state of the task is a stopped state, a timeout state, or a completed state, the task is considered to have been terminated.

The callback function includes a failure callback function and a completion callback function, and it is needed to perform a failure callback and a completion callback for each task.

In some examples, the pipeline thread calls a corresponding callback function after receiving the response message returned by the external shuffle service.

In step 502, the task on which the callback operation is performed is removed from the pipeline task set.

After the pipeline thread performs the callback operation on the task, the task is removed from the pipeline task set.

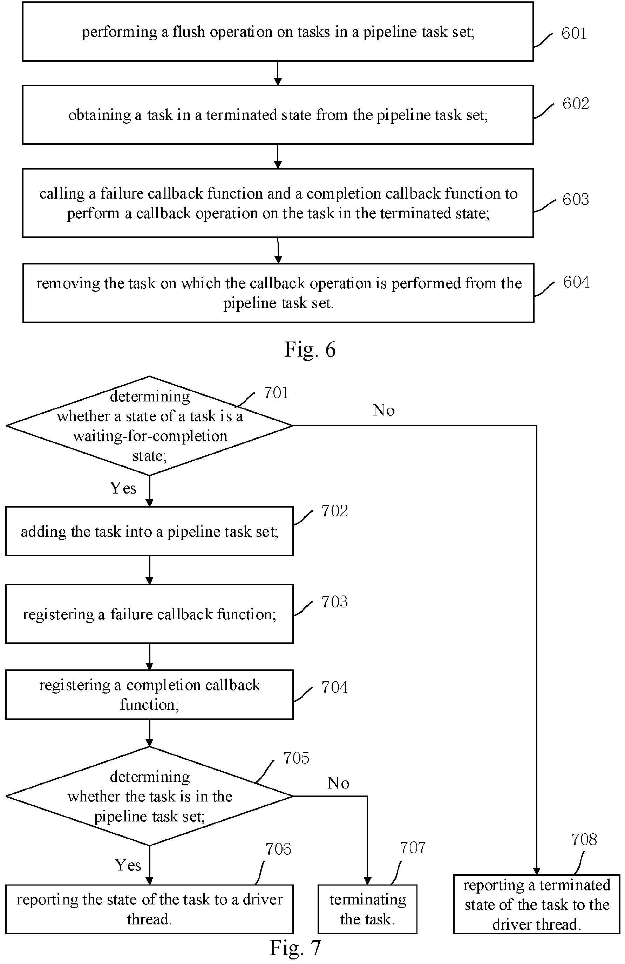

Fig. 6 is another flowchart of managing a pipeline task set by a pipeline thread according to an embodiment of the present disclosure. As shown in Figure 6, that the pipeline thread manages the pipeline task set includes the following steps 601-604.

In step 601, a flush operation is performed on tasks in the pipeline task set.

In some examples, the pipeline thread flushes the tasks according to a flushing strategy. The flushing strategy may be that the flush operation is performed on the tasks in the pipeline task set at a preset time interval, or that the flush operation is performed on the tasks in the pipeline task set when the number of the tasks reaches a preset value. For example, if the preset time interval is 10 minutes, the pipeline thread performs a flush operation on the tasks in the pipeline task set every 10 minutes. For another example, when the number of the tasks in the pipeline task set reaches the preset value, the pipeline thread performs the flush operation on the tasks in the pipeline task set. It should be noted that the pipeline thread flushes the tasks according to the flushing strategy. This embodiment does not limit the flushing strategy.

In this example, the flushing strategy can reduce the number of small files in the distributed storage process, reduce the load of distributed storage, and improve the throughput capacity of the distributed file system.

In step 602, a task in a terminated state is obtained from the pipeline task set.

The terminated state includes a stopped state, a timeout state, and/or a completed state. Correspondingly, the task in the terminated state includes a stopped task, a timeout task, and/or a completed task.

In some examples, the tasks in the pipeline task set are filtered to obtain the stopped task, the timeout task, and/or the completed task.

In step 603, a failure callback function and a completion callback function are called, and thus a callback operation is performed on the task in the terminated state.

In some examples, the failure callback function and the completion callback function are triggered to callback the task. For example, for a task in a stopped state, the failure callback function and the completion callback function are triggered to callback the task. For the timeout task, the failure callback function and the completion callback function are triggered to call back the task. For the completed task, the completion callback function is triggered to call back the task.

It should be noted that the sequence that the pipeline thread calls back the tasks is not limited. For example, the task in the stopped state is filtered out firstly, and called back; then the timeout task is filtered out and called back; and finally, the completed task is filtered out and called back. For another example, the timeout task is filtered out firstly, and called back; then the task in the stopped state is filtered out and called back; and finally, the completed task is filtered out and called back.

In step 604, the task on which the callback operation is performed is removed from the pipeline task set.

After the pipeline thread calls back the task, the task is removed from the pipeline task set.

In some examples, when the pipeline thread calls back the task, a state update function may be called to report the state and executing result of the task to the driver thread. The executor thread can support two callback functions, namely, the failure callback function and the completion callback function.

Fig. 7 is a flowchart of updating a state of a task by a state update function according to an embodiment of the present disclosure. As shown in Fig. 7, updating the state of the task by the state update function includes the following steps 701-708.

In step 701, it is determined whether the state of the task is a waiting-for-completion state.

In some examples, when it is determined that the state of the task is not the waiting-for-completion state, step 708 is executed. When it is determined that the state of the task is the waiting-for-completion state, step 702 is executed. When the state of the task is not the waiting-for-completion state, the state of the task may be considered as a terminated state.

In step 702, the task is added into a pipeline task set.

When the state of the task is the waiting-for-completion state, the task is added into the pipeline task set.

In step 703, a failure callback function is registered.

The failure callback function is registered in a pipeline thread in step 703.

In step 704, a completion callback function is registered.

The completion callback function is registered in the pipeline thread in step 704.

In step 705, it is determined whether the task is in the pipeline task set.

In some embodiments, if the task is in the pipeline task set, step 706 is executed; and if the task is not in the pipeline task set, step 707 is executed.

In step 706, the state of the task is reported to a driver thread.

The waiting-for-completion state of the task is reported to the driver thread in step 706.

In step 707, the task is terminated.

In step 707, if the task is not in the pipeline task set, it is proved that a callback function of the task has been triggered, and thus there is no need to report the waiting-for-completion state, and the task can be terminated directly.

In step 708, the terminated state of the task is reported to the driver thread.

It should be noted that in step 708, an executor thread directly reports the terminated state of the task to the driver thread according to a Spark process.

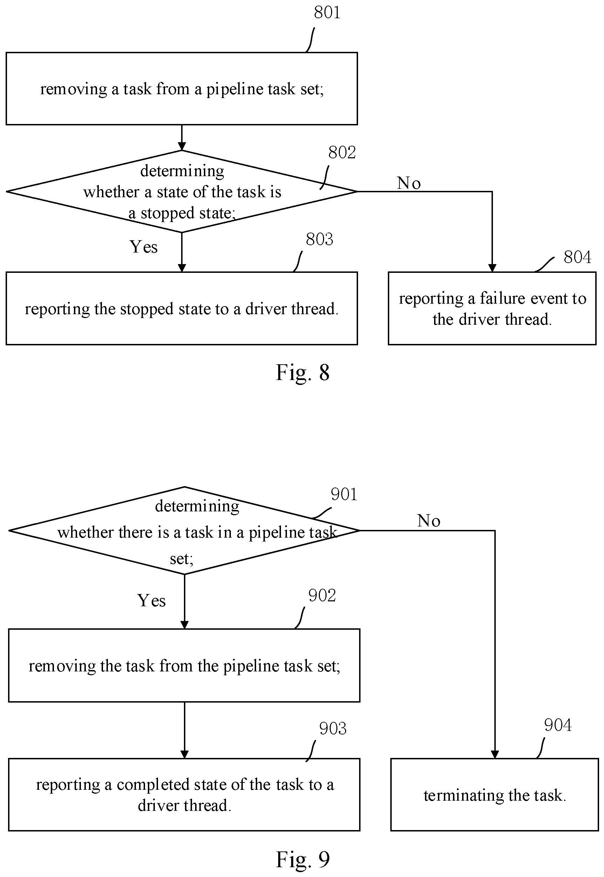

Fig. 8 is a flowchart of performing a failure callback by using a failure callback function according to an embodiment of the present disclosure. As shown in Fig. 8, performing the failure callback by using the failure callback function includes the following steps 801-804.

In step 801, a task is removed from a pipeline task set.

The task in the pipeline task set is in a waiting-for-completion state. When the external shuffle service completes storage, it will return a new state, and the executor thread will update the state of the task at any time. Therefore, in a flush operation, the task needs to be removed from the pipeline task set.

In step 802, it is determined whether the state of the task is a stopped state.

In some examples, when it is determined that the state of the task is the stopped state, step 803 is executed. When it is determined that the state of the task is not the stopped state, step 804 is executed. When the state of the task is not the stopped state, the state of the task may be considered as a failed state.

In step 803, the stopped state is reported to the driver thread.

In step 804, a failure event is reported to the driver thread.

Fig. 9 is a flowchart of performing a completion callback by using a completion callback function according to an embodiment of the present disclosure. As shown in Fig. 9, performing the completion callback by using the completion callback function includes the following steps 901-904.

In step 901, it is determined whether there is a task in a pipeline task set.

In some examples, when there is a task in the pipeline task set, step 902 is executed; and when there is no task in the pipeline task set, step 904 is executed.

In step 902, the task is removed from the pipeline task set.

In step 903, a completed state of the task is reported to a driver thread.

In step 904, the task is terminated.

In step 904, if there is no task in the pipeline task set, it is proved that all tasks are in a failed state or a stopped state, and the task may be directly terminated without reporting to the driver thread.

According to the distributed storage method provided by the present disclosure, data is read and sent to an external shuffle service, in response to a request of a task from a driver thread; a state of the task is modified to a waiting-for-completion state, after sending the data to the external shuffle service is finished; and the waiting-for-completion state is sent to the driver thread, so that the driver thread releases the executor thread corresponding to the task. That is, when the executor thread finishes sending the data to the external shuffle service, the executor thread returns to the driver thread that the task is in the waiting-for-completion state, and the driver thread immediately releases the executor thread corresponding to the task. It is not necessary to wait until the task is in a terminated state before releasing the corresponding executor thread, which reduces the waste of the resources of the executor thread and improves the efficiency of task operations.

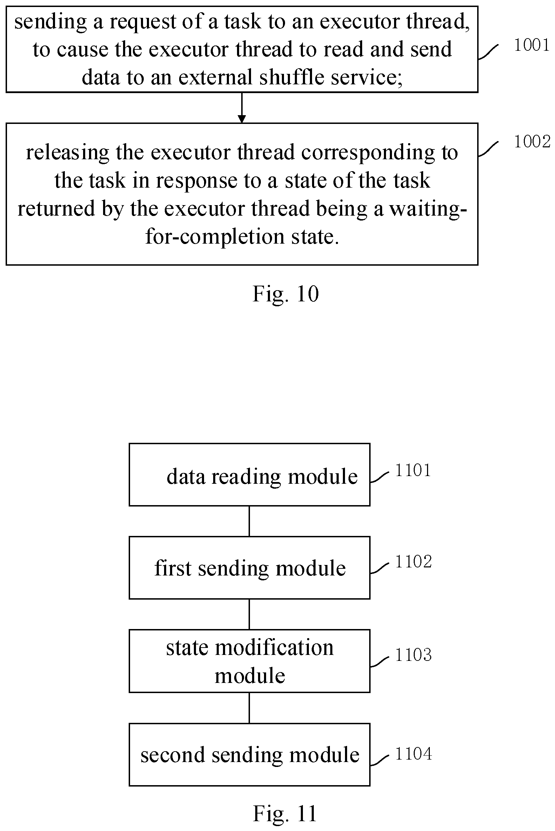

In a second Z aspect of the present disclosure, provided is a distributed storage method, which is applied to a driver thread of Spark. Fig. 10 is a flowchart of a distributed storage method according to an embodiment of the present disclosure. As shown in Fig. 10, the distributed storage method includes the following steps 1001-1002.

In step 1001, a request of a task is sent to an executor thread, so that the executor thread reads and sends data to an external shuffle service.

The driver thread assigns the task to the executor thread; and the executor thread executes the corresponding task in response to the request of the task from the driver thread, and stores the data in a distributed file system.

The driver thread stores the data in the distributed file system through the external shuffle service. When the executor thread receives the task distributed by the driver thread, the executor thread reads the data and continuously sends the data to the external shuffle service, and the external shuffle service stores the data in the distributed file system.

In some examples, the executor thread performs a first task, namely a Map Shuffle Task and a second task, namely a result Task. The step of executing the Map Shuffle Task by the executor thread includes: reading user's data through the Map Shuffle Task in response to the request of the task from the driver thread, and constructing the data into an RDD; calling a user's processing logic to process the RDD to obtain shuffle data; and finally, writing the shuffle data into the external shuffle service continuously.

In step 1002, the executor thread corresponding to the task is released, in response to a state of the task returned by the executor thread being a waiting-for-completion state.

The waiting-for-completion state is a state in which the task is after the executor thread finishing sending the data to the external shuffle service.

In some examples, when the data is written into the external shuffle service by the executor thread, the waiting-for-completion state is sent to the driver thread. When the state of the task received by the driver thread is the waiting-for-completion state, the driver thread releases the executor thread corresponding to the task, so that the driver thread may reallocate tasks for the executor thread.

In some examples the specific work flow of the executor thread may be referred to the flowchart shown in Fig. 3, and the description will not be repeated herein.

According to the distributed storage method provided by the present disclosure, data is read and sent to an external shuffle service, in response to a request of a task from a driver thread; a state of the task is modified to a waiting-for-completion state, after sending the data to the external shuffle service is finished; and the waiting-for-completion state is sent to the driver thread, so that the driver thread releases the executor thread corresponding to the task. That is, when the executor thread finishes sending the data to the external shuffle service, i.e., that the task is in the waiting-for-completion state is returned to the driver thread, the driver thread immediately releases the executor thread corresponding to the task. It is not necessary to wait until the task is in a terminated state before releasing the corresponding executor thread, which reduces the waste of the resources of the executor thread and improves the efficiency of task operations.

In a third aspect, according to an example useful for understanding the invention, provided is a distributed storage device, which is applied to an executor thread. Fig. 11 is a functional block diagram of a distributed storage device according to an example useful for understanding the invention. As shown in Fig. 11, the distributed storage device includes the following modules.

A data reading module 1101 is configured to read data in response to a request of a task from a driver thread.

The driver thread assigns the task to the executor thread; and the executor thread executes the corresponding task in response to the request of the task from the driver thread, and stores the data in a distributed file system.

The driver thread stores the data in the distributed file system through the external shuffle service. When the executor thread receives the task distributed by the driver thread, the executor thread reads the data and continuously sends the data to the external shuffle service, and the external shuffle service stores the data in the distributed file system.

A first sending module 1102 is configured to send the data to an external shuffle service.

In some examples, the executor thread may also process the data before sending the data to the external shuffling service. Specifically, the executor thread reads user's data in response to the request of the task from the driver thread, and constructs the data into an RDD; and then calls a user's processing logic to process the RDD to obtain shuffle data; and finally, writes the shuffle data into the external shuffle service continuously.

A state modification module 1103 is configured to modify a state of the task to a waiting-for-completion state after sending the data to the external shuffle service is finished.

In some examples, the executor thread uses a task set list to manage tasks, and the task set list marks a current state of each task. Task states include a started state, a running state, a completed state, a failed state, a stopped state, a lost state, and the waiting-for-completion state. The waiting-for-completion state is a state in which the sending the data to the external shuffle service has been finished by the executor thread, but the task has not been finished. In other words, when the data has been written into the external shuffle service, the data has not yet been written into the distributed file system through the external shuffle service, and the state of the task does not belong to the completed state, that is, the task has not been completely finished actually.

In this example, except for the original task states, the waiting-for-completion state is added to indicate that the data has been written into the external shuffle service and is waiting to be stored in the distributed file system by the external shuffle service. At this point, the executor thread has no specific work and no longer takes up resources.

A second sending module 1104 is configured to send the waiting-for-completion state to the driver thread, so that the driver thread releases an executor thread corresponding to the task.

In some examples, when the data is written into the external shuffle service by the executor thread, the waiting-for-completion state is sent to the driver thread. When the state of the task received by the driver thread is the waiting-for-completion state, the driver thread releases the executor thread corresponding to the task, so that the driver thread may reallocate tasks for the executor thread.

According to the distributed storage device provided by the example useful for understanding the invention, data is read and sent to an external shuffle service, in response to a request of a task from a driver thread; a state of the task is modified to a waiting-for-completion state, after sending the data to the external shuffle service is finished; and the waiting-for-completion state is sent to the driver thread, so that the driver thread releases the executor thread corresponding to the task. That is, when the executor thread finishes sending the data to the external shuffle service, the executor thread returns to the driver thread that the task is in the waiting-for-completion state, and the driver thread immediately releases the executor thread corresponding to the task. It is not necessary to wait until the task is in a terminated state before releasing the corresponding executor thread, which reduces the waste of the resources of the executor thread and improves the efficiency of task operations.

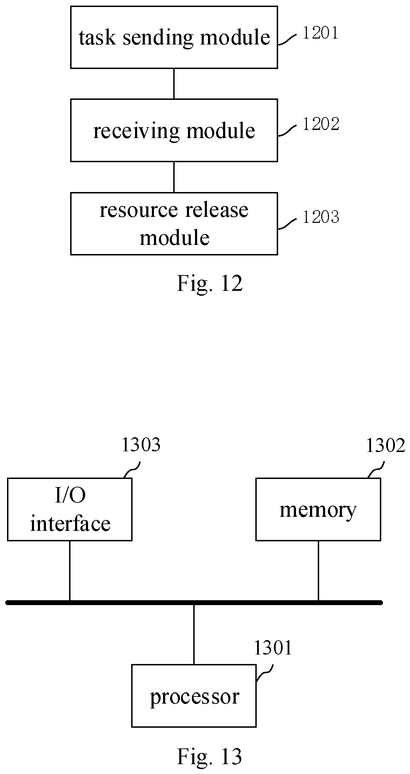

In a fourth aspect, according to an example useful for understanding the invention, provided is a distributed storage device, which is applied to a driver thread. Fig. 12 is a functional block diagram of a distributed storage device according to an example useful for understanding the invention. As shown in Fig. 12, the distributed storage device includes the following modules.

A task sending module 1201 is configured to send a request of a task to an executor thread, so that the executor thread reads and sends data to an external shuffle service.

The driver thread assigns the task to the executor thread; and the executor thread executes the corresponding task in response to the request of the task from the driver thread, and stores the data in a distributed file system.

The driver thread stores the data in the distributed file system through the external shuffle service. When the executor thread receives the task distributed by the driver thread, the executor thread reads the data and continuously sends the data to the external shuffle service, and the external shuffle service stores the data in the distributed file system.

The executor thread performs a first task, namely a Map Shuffle Task and a second task, namely a result Task. The step of executing the Map Shuffle Task by the executor thread includes: reading user's data through the Map Shuffle Task in response to the request of the task from the driver thread, and constructing the data into an RDD; calling a user's processing logic to process the RDD to obtain shuffle data; and finally, writing the shuffle data into the external shuffle service continuously.

A receiving module 1202 is configured to receive a state of the task returned by the executor thread.

A resource release module 1203 is configured to release the executor thread corresponding to the task when the state of the task returned by the executor thread is a waiting-for-completion state.

The waiting-for-completion state is a state in which the task is after the executor thread finishing sending the data to the external shuffle service.

In some examples, when the data is written into the external shuffle service by the executor thread, the waiting-for-completion state is sent to the driver thread. When the state of the task received by the driver thread is the waiting-for-completion state, the driver thread releases the executor thread corresponding to the task, so that the driver thread may reallocate tasks for the executor thread.

According to the distributed storage device provided by the example useful for understanding the invention, data is read and sent to an external shuffle service, in response to a request of a task from a driver thread; a state of the task is modified to a waiting-for-completion state, after sending the data to the external shuffle service is finished; and the waiting-for-completion state is sent to the driver thread, so that the driver thread releases the executor thread corresponding to the task. That is, when the executor thread finishes sending the data to the external shuffle service, the executor thread returns to the driver thread that the task is in the waiting-for-completion state, and the driver thread immediately releases the executor thread corresponding to the task. It is not necessary to wait until the task is in a terminated state before releasing the corresponding executor thread, which reduces the waste of the resources of the executor thread and improves the efficiency of task operations.

In a fifth aspect, referring to Fig. 13, provided is an electronic apparatus including: at least one processor 1301; a memory 1302 storing at least one program thereon, wherein when the at least one program is executed by the at least one processor, the at least one processor implements any one of the above-mentioned distributed storage methods; and at least one I/O interface 1303, connected between the at least one processor and the memory, and configured to implement information interaction between the at least one processor and the memory.

The processor 1301 is a device having a data processing capability, and includes, but is not limited to, a central processing unit (CPU) and the like. The memory 1302 is a device having a data storage capability, and includes, but is not limited to, a random access memory (RAM, more specifically, such as a synchronous dynamic RAM (SDRAM), a double data rate SDRAM (DDR SDRAM), etc.), a read only memory (ROM), an electrically erasable programmable read only memory (EEPROM), and a flash memory (FLASH). The I/O interface (read/write interface) 1303 is connected between the processor 1301 and the memory 1302, enables the information interaction between the processor 1301 and the memory 1302, and includes, but is not limited to, a data bus etc.

In some examples, the processor 1301, the memory 1302, and the I/O interface 1303 are connected to each other through a bus, so as to be further connected to the other components of the electronic apparatus.

In a sixth aspect, provided is a computer-readable medium storing a computer program thereon. When the computer program is executed by a processor, any one of the above-mentioned distributed storage methods is realized.

It should be understood by those of ordinary skill in the art that the functional modules/units in all or some of the steps, systems, and devices in the method disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those of ordinary skill in the art, the term "computer storage media" includes volatile/nonvolatile and removable/non-removable media used in any method or technology for storing information (such as computer-readable instructions, data structures, program modules and other data). The computer storage media include, but are not limited to, RAM, ROM, EEPROM, flash memory or other memory techniques, CD-ROM, digital versatile disk (DVD) or other optical discs, magnetic cassette, magnetic tape, magnetic disk or other magnetic storage devices, or any other media which can be used to store the desired information and can be accessed by a computer. In addition, it is well known by those of ordinary skill in the art that the communication media generally include computer-readable instructions, data structures, program modules or other data in a modulated data signal, such as a carrier wave or other transmission mechanism, and may include any information delivery media.

## Claims

1. A distributed storage method applied to an application having one driver thread (11) and a plurality of executor threads (12), which is **characterized by**:
receiving and executing, by an executor thread (12) of the plurality of executor threads (12), a task assigned by the driver thread (11) to the executor thread (12) in response to a request of the task from the driver thread (11);
reading, by the executor thread (12), data and continuously sending (201) the data to an external shuffle service (13) for storage in a distributed storage system for persistence;
modifying (202), by the executor thread (12), a state of the task to a waiting-for-completion state after finishing sending the data to the external shuffle service (13);
adding (404), by the executor thread (12), the task in the waiting-for-completion state to a pipeline task set of the external shuffle service (13); and
sending (203), by the executor thread (12), the waiting-for-completion state to the driver thread (11) to cause the driver thread (11) to release the executor thread (12) corresponding to the task; and
wherein the executor thread (12) corresponding to the task in waiting-for-completion is released by the driver thread (11), and the pipeline task set is managed, by a pipeline thread, in a list in which tasks in the pipeline task set and the states of the tasks are listed.

2. The method according to claim 1, wherein reading, by the executor thread (12), data and continuously sending (201) the data to an external shuffle service (13) for storage in a distributed storage system for persistence comprises:
reading, by the executor thread (12), the data in response to the request of the task from the driver thread (11), and constructing a Resilient Distributed DataSet based on the data;
processing, by the executor thread (12), the Resilient Distributed DataSet to obtain shuffle data; and
writing, by the executor thread (12), the shuffle data into the external shuffle service (13).

3. The method according to claim 1, after adding (404), by the executor thread (12), the task in the waiting-for-completion state to the pipeline task set of the external shuffle service (13), further comprising:
performing (501), by the executor thread (12), a callback operation on the task by calling a callback function in response to a response message returned by the external shuffle service (13); and
removing (502), by the executor thread (12), the task on which the callback operation is performed from the pipeline task set.

4. The method according to claim 1, after adding, by the executor thread (12), the task in the waiting-for-completion state to the pipeline task set, further comprising:
performing (601), by the executor thread (12), a flush operation on the tasks in the pipeline task set;
filtering (602), by the executor thread (12), out a task in a terminated state from the pipeline task set;
calling (603), by the executor thread (12), a failure callback function and a completion callback function to perform a callback operation on the task in the terminated state; and
removing (604), by the executor thread (12), the task on which the callback operation is performed from the pipeline task set.

5. The method according to claim 4, wherein performing, by the executor thread (12), the flush operation on the tasks in the pipeline task set comprises:
performing, by the executor thread (12), the flush operation on the tasks in the pipeline task set according to a preset time interval or in response to a number of the tasks reaching a preset value.

6. The method according to claim 4 or 5, wherein the terminated state comprises a stopped state, a timeout state, and/or a completed state.

7. A distributed storage method applied to an application having one driver thread (11) and a plurality of executor threads (12), which is **characterized by**:
assigning, by the driver thread (11), a task to an executor thread (12) of the plurality of executor threads (12);
sending (1001), by the driver thread (11), a request of a task to the executor thread (12), to cause the executor thread (12) to execute the task, read data, and continuously sending the data to an external shuffle service (13) for storage in a distributed storage system persistence; and
releasing (1002), by the driver thread (11), the executor thread (12) corresponding to the task, in response to a state of the task returned by the executor thread (12) being a waiting-for-completion state; wherein the waiting-for-completion state is a state in which the task is after the executor thread (12) finishing sending the data to the external shuffle service (13),
wherein the task in the waiting-for-completion state is added (404) to a pipeline task set of the external shuffle service (13) by the executor thread (12), and the pipeline task set is managed, by a pipeline thread, in a list in which tasks in the pipeline task set and the states of the tasks are listed.

8. An electronic apparatus, comprising:
at least one processor (1301);
a memory (1302) storing at least one program thereon, wherein when the at least one program is executed by the at least one processor, the at least one processor implements the method according to any one of claims 1-7; and
at least one I/O interface (1303) connected between the at least one processor and the memory and configured to implement information interaction between the at least one processor and the memory.

9. A computer-readable medium storing a computer program thereon, wherein the computer program is executed by a processor for implementing the method according to any one of claims 1-7.

## Patentansprüche

1. Verfahren zur verteilten Speicherung, das auf eine Anwendung mit einem Treiber-Thread (11) und einer Vielzahl von Ausführungs-Threads (12) angewandt wird, **gekennzeichnet durch**:
Empfangen und Ausführen, durch einen Ausführungs-Thread (12) der Vielzahl von Ausführungs-Threads (12), einer Aufgabe, die durch den Treiber-Thread (11) dem Ausführungs-Thread (12) zugewiesen wurde, als Reaktion auf eine Anforderung der Aufgabe von dem Treiber-Thread (11);
Lesen von Daten durch den Ausführungs-Thread (12) und kontinuierliches Senden (201) der Daten an einen externen Shuffle-Dienst (13) zur Speicherung in einem verteilten Speichersystem zur Persistenz;
Ändern (202) eines Zustands der Aufgabe durch den Ausführungs-Thread (12) in einen Zustand "Warten auf Fertigstellung" nach Beendigung des Sendens der Daten an den externen Shuffle-Dienst (13);
Hinzufügen (404), durch den Ausführungs-Thread (12), der Aufgabe in dem Warten-auf-Fertigstellung-Zustand zu einem Pipeline-Aufgabensatz des externen Shuffle-Dienstes (13); und
Senden (203) des Zustands "Warten-auf-Fertigstellung" durch den Ausführungs-Thread (12) an den Treiber-Thread (11), um den Treiber-Thread (11) zu veranlassen, den der Aufgabe entsprechenden Ausführungs-Thread (12) freizugeben; und
wobei der Ausführungs-Thread (12), der der Aufgabe im Warten auf Fertigstellung-Zustand entspricht, durch den Treiber-Thread (11) freigegeben wird und der Pipeline-Aufgabensatz durch einen Pipeline-Thread in einer Liste verwaltet wird, in der die Aufgaben im Pipeline-Aufgabensatz und die Zustände der Aufgaben aufgelistet sind.

2. Verfahren nach Anspruch 1, wobei das Lesen von Daten durch den Ausführungs-Thread (12) und das kontinuierliche Senden (201) der Daten an einen externen Shuffle-Dienst (13) zur Speicherung in einem verteilten Speichersystem zur Persistenz umfasst:
Lesen der Daten durch den Ausführungs-Thread (12) als Reaktion auf die Anforderung der Aufgabe vom Treiber-Thread (11) und Erstellen eines stabilen verteilten Datensatzes auf der Grundlage der Daten;
Verarbeitung des stabilen verteilten Datensatzes durch den Ausführungs-Thread (12), um Shuffle-Daten zu erhalten; und
Schreiben der Shuffle-Daten in den externen Shuffle-Dienst (13) durch den Ausführungs-Thread (12).

3. Verfahren nach Anspruch 1, wobei nach dem Hinzufügen (404) der Aufgabe im Warten-auf-Fertigstellung-Zustand durch den Ausführungs-Thread (12) zu dem Pipeline-Aufgabensatz des externen Shuffle-Dienstes (13), ferner Folgendes vorgesehen ist:
Durchführen (501) einer Rückruf-Operation, durch den Ausführungs-Thread (12), an der Aufgabe durch Aufrufen einer Rückruf-Funktion als Reaktion auf eine Antwortnachricht, die von dem externen Shuffle-Dienst (13) zurückgegeben wird; und
Entfernen (502) der Aufgabe, durch den Ausführungs-Thread (12), an der die Rückruf-Operation ausgeführt wird aus dem Pipeline-Aufgabensatz.

4. Verfahren nach Anspruch 1, nachdem Hinzufügen der Aufgabe, durch den Ausführungs-Thread (12), die sich im Zustand "Warten-auf-Fertigstellung" befindet, zu dem Pipeline-Aufgabensatz, ferner umfassend:
Durchführen (601) einer Bereinigungs-Operation an den Aufgaben im Pipeline-Aufgabensatz durch den Ausführungs-Thread (12);
Herausfiltern (602) einer Aufgabe in einem beendeten Zustand aus dem Pipeline-Aufgabensatz durch den ausführenden Thread (12);
Aufrufen (603), durch den Ausführungs-Thread (12), einer Fehler-Rückruf-Funktion und einer Abschluss-Rückruf-Funktion, um eine Rückruf-Operation an der Aufgabe in dem beendeten Zustand durchzuführen; und
Entfernen (604) der Aufgabe, an der die Rückruf-Operation durchgeführt wird, aus dem Pipeline-Aufgabensatz durch den ausführenden Thread (12).

5. Verfahren nach Anspruch 4, wobei das Durchführen der Bereinigungs-Operation an den Aufgaben in dem Pipeline-Aufgabensatz durch den Ausführungs-Thread (12) umfasst:
Ausführen der Bereinigungs-Operation an den Aufgaben im Pipeline-Aufgabensatz durch den Ausführungs-Thread (12) gemäß einem voreingestellten Zeitintervall oder als Reaktion darauf, dass eine Anzahl der Aufgaben einen voreingestellten Wert erreicht.

6. Verfahren nach Anspruch 4 oder 5, wobei der beendete Zustand einen gestoppten Zustand, einen Timeout-Zustand und/oder einen abgeschlossenen Zustand umfasst.

7. Verfahren zur verteilten Speicherung, das auf eine Anwendung mit einem Treiber-Thread (11) und einer Vielzahl von Ausführungs-Threads (12) angewandt wird, **gekennzeichnet durch**:
Zuweisen einer Aufgabe durch den Treiber-Thread (11) an einen Ausführungs-Thread (12) aus der Vielzahl der Ausführungs-Threads (12);
Senden (1001) einer Anforderung einer Aufgabe durch den Treiber-Thread (11) an den Ausführungs-Thread (12), um den Ausführungs-Thread (12) zu veranlassen, die Aufgabe auszuführen, Lesen von Daten und kontinuierliches Senden der Daten an einen externen Shuffle-Dienst (13) zur Speicherung in einem verteilten Speichersystem für Persistenz; und
Freigeben (1002) des Ausführungs-Threads (12), der der Aufgabe entspricht, durch den Treiber-Thread (11) als Reaktion auf einen Zustand der Aufgabe, der von dem Ausführungs-Thread (12) zurückgegeben wird, der ein Warten-auf-Fertigstellung-Zustand ist; wobei der Warten-auf-Fertigstellung-Zustand ein Zustand ist, in dem sich die Aufgabe befindet, nachdem der Ausführungs-Thread (12) das Senden der Daten an den externen Shuffle-Dienst (13) beendet hat,
wobei die Aufgabe in dem Zustand "Warten-auf-Fertigstellung" durch den Ausführungs-Thread (12) zu einem Pipeline-Aufgabensatz des externen Shuffle-Dienstes (13) hinzugefügt wird (404) und der Pipeline-Aufgabensatz durch einen Pipeline-Thread in einer Liste verwaltet wird, in der Aufgaben in dem Pipeline-Aufgabensatz und die Zustände der Aufgaben aufgeführt sind.

8. Ein elektronisches Gerät, umfassend:
mindestens einen Prozessor (1301);
einen Speicher (1302), in dem mindestens ein Programm gespeichert ist, wobei, wenn das mindestens eine Programm von dem mindestens einen Prozessor ausgeführt wird, der mindestens eine Prozessor das Verfahren nach einem der Ansprüche 1-7 durchführt; und
mindestens eine E/A-Schnittstelle (1303), die zwischen den mindestens einen Prozessor und den Speicher geschaltet und so konfiguriert ist, dass sie eine Informationsinteraktion zwischen dem mindestens einen Prozessor und dem Speicher realisiert.

9. Computerlesbares Medium, auf dem ein Computerprogramm gespeichert ist, wobei das Computerprogramm von einem Prozessor zur Durchführung des Verfahrens nach einem der Ansprüche 1-7 ausgeführt wird.

## Revendications

1. Procédé de stockage distribué appliquée à une application comportant un thread pilote (11) et une pluralité de threads exécuteurs (12), qui se **caractérise par** :
recevoir et exécuter, par un thread exécuteur (12) de la pluralité de threads exécuteurs (12), une tâche assignée par le thread pilote (11) au thread exécuteur (12) en réponse à une demande de tâche émanant du thread pilote (11) ;
lecturier, par le thread exécuteur '(12), des données et envoyer continuellement (201) des données à un service de mélange externe (13) pour stockage dans un système de stockage distribué à des fins de persistance ;
modifier (202), par le thread exécuteur (12), un état de la tâche en un état d'attente d'achèvement après avoir fini d'envoyer les données au service de mélange externe (13) ;
ajouter (404), par le thread exécuteur (12), la tâche en attente d'achèvement à un ensemble de tâches du pipeline du service de mélange externe (13) ; et
envoyer (203), par le thread exécuteur (12), l'état d'attente d'achèvement au thread pilote (11) pour que le thread pilote (11) libère le thread exécuteur (12) correspondant à la tâche ; et
dans lequel le thread exécuteur (12) correspondant à la tâche en attente d'achèvement est libéré par le thread pilote (11), et l'ensemble de tâches de pipeline est géré, par un thread de pipeline, dans une liste dans laquelle les tâches de l'ensemble de tâches de pipeline et les états des tâches sont répertoriés.

2. Procédé selon la revendication 1, dans laquelle la lecture, par le thread exécuteur (12), des données et l'envoi continu (201) des données à un service de mélange externe (13) pour le stockage dans un système de stockage distribué pour la persistance comprend :
lecturer, par le thread exécuteur (12), des données en réponse à la demande de la tâche par le thread pilote (11), et construire un ensemble de données distribuées résilientes sur la base des données ;
traiter, par le thread exécuteur (12), l'ensemble de données distribué résilient afin d'obtenir des données de brassage ; et
écrire, par le thread exécuteur (12), des données de mélange dans le service de mélange externe (13).

3. Procédé selon la revendication 1, après avoir ajouté (404), par le thread exécuteur (12), la tâche en attente d'achèvement à l'ensemble de tâches du pipeline du service de mélange externe (13), comprend en outre :
exécuter (501), par le thread exécuteur (12), une opération de rappel sur la tâche en appelant une fonction de rappel en réponse à un message de réponse renvoyé par le service de mélange externe (13) ; et
retraiter (502), par le thread exécuteur (12), la tâche sur laquelle l'opération de rappel est effectuée à partir de l'ensemble des tâches du pipeline.

4. Procédé selon la revendication 1, après avoir ajouté, par le thread exécuteur (12), la tâche en attente d'achèvement à l'ensemble des tâches du pipeline, comprend en outre :
exécuter (601), par le thread exécuteur (12), une opération de rinçage sur les tâches de l'ensemble de tâches du pipeline ;
filtrer (602), par le thread exécuteur (12), une tâche dans un état terminé à partir de l'ensemble des tâches du pipeline ;
appeler (603), par le thread exécuteur (12), une fonction de rappel d'échec et une fonction de rappel d'achèvement pour effectuer une opération de rappel sur la tâche dans l'état terminé ; et
retraiter (604), par le thread exécuteur (12), la tâche sur laquelle l'opération de rappel est effectuée à partir de l'ensemble des tâches du pipeline.

5. Procédé selon la revendication 4, dans lequel l'exécution, par le thread exécuteur (12), de l'opération de rinçage sur les tâches de l'ensemble de tâches du pipeline comprend :
exécuter, par le thread exécuteur (12), l'opération de rinçage sur les tâches de l'ensemble de tâches du pipeline selon un intervalle de temps prédéfini ou en réponse à un nombre de tâches atteignant une valeur prédéfinie.

6. Procédé selon la revendication 4 ou 5, dans laquelle l'état terminé comprend un état d'arrêt, un état de dépassement de délai et/ou un état d'achèvement.

7. Procédé de stockage distribué appliquée à une application comportant un thread pilote (11) et une pluralité de threads exécuteurs (12), **caractérisée par** :
attribuer, par le thread pilote (11), une tâche à un thread exécuteur (12) de la pluralité de threads exécuteurs (12) ;
envoyer (1001), par le thread pilote (11), une demande de tâche au thread exécuteur (12), pour que le thread exécuteur (12) exécute la tâche, lire les données, et envoyer continuellement les données à un service de mélange externe (13) pour le stockage dans un système de stockage distribué pour la persistance ; et
libérer (1002), par le thread pilote (11), le thread exécuteur (12) correspondant à la tâche, en réponse à un état de la tâche renvoyé par le thread exécuteur (12) qui est un état d'attente d'achèvement ; dans lequel l'état d'attente d'achèvement est un état dans lequel la tâche se trouve après que le thread exécuteur (12) a fini d'envoyer les données au service de mélange externe (13),
la tâche en attente d'achèvement est ajoutée (404) à un ensemble de tâches de pipeline du service de mélange externe (13) par le thread exécuteur (12), et l'ensemble de tâches de pipeline est géré, par un thread de pipeline, dans une liste dans laquelle les tâches de l'ensemble de tâches de pipeline et les états des tâches sont répertoriés.

8. Appareil électronique comprenant
au moins un processeur (1301) ;
une mémoire (1302) stockant au moins un programme informatique, dans laquelle, lorsque l'au moins un programme informatique est exécuté par l'au moins un processeur, l'au moins un processeur met en oeuvre le procédé selon l'une quelconque des revendications 1 à 7 ; et
au moins une interface E/S (1303) connectée entre l'au moins un processeur et la mémoire et configurée pour mettre en oeuvre l'interaction des informations entre l'au moins un processeur et la mémoire.

9. Support lisible par ordinateur contenant un programme informatique, dans lequel le programme informatique est exécuté par un processeur pour mettre en oeuvre le procédé selon l'une des revendications 1 à 7.
